Europäisches Patentamt

European Patent Office

Office européen des brevets

(19)

(11) Numéro de publication: **0 278 197 B1**

# FASCICULE DE BREVET EUROPEEN

(12)

(45) Date de publication du fascicule du brevet:
03.10.90

(51) Int. Cl.⁵: **A47J 31/057**, A47J 31/00, A47J 31/06

(21) Numéro de dépôt: 87402959.8

(22) Date de dépôt: 22.12.87

(54) Cafetière automatique à distribution d'eau perfectionnée.

(30) Priorité: 23.12.86 FR 8618063
16.06.87 FR 8708354

(43) Date de publication de la demande:
17.08.88 Bulletin 88/33

(45) Mention de la délivrance du brevet:
03.10.90 Bulletin 90/40

(84) Etats contractants désignés:
AT BE CH DE ES FR GB IT LI LU NL SE

(56) Documents cités:
BE-A- 887 805
DE-A- 2 657 354
DE-A- 3 438 539
US-A- 1 470 584
US-A- 2 638 839
US-A- 2 721 511
US-A- 4 112 830

(73) Titulaire: CHARBONNAGES DE FRANCE, Etablissement
public dit:, Tour Albert 1er 65 avenue de Colmar,
F-92507 Rueil Malmaison Cédex(FR)

(72) Inventeur: Lefevre, Alain, 38 rue de la Vallée
Saint-Nicolas d'Acy, F-60300 Senlis(FR)
Inventeur: Houeix, Jean-Pierre, 141 Belle Rue Moru
Pontpoint, F-60700 Pont Ste Maxence(FR)

(74) Mandataire: Chevallier, Robert Marie Georges et al,
Cabinet BOETTCHER 23, rue La Boétie,
F-75008 Paris(FR)

## Description

L'invention a pour objet une cafetière automatique du type défini dans le préambule de la revendication 1 comprenant un réservoir d'eau auquel est associé un moyen de chauffage, un récipient amovible pour contenir du café moulu et dont au moins le fond est constitué par un filtre, un conduit partant du réservoir d'eau et se terminant par un orifice situé au-dessus du récipient du café moulu.

Dans les cafetières de ce type connues jusqu'à présent, l'eau chauffée par le moyen de chauffage s'élève dans le conduit et sort par l'orifice pour tomber sur la masse de café moulu contenue dans le récipient amovible. Comme la section droite de ce dernier est considérablement plus grande que la section droite de l'orifice de sortie de l'eau chaude, celle-ci tombe toujours dans une même zone de faible étendue. Il en résulte un café de qualité médiocre que n'apprécient pas les véritables amateurs étant donné que le marc de café a subi une extraction excessive dans la zone arrosée constamment et insuffisante dans le reste de sa masse.

Le document US-A 2 638 839 décrit une cafetière dans laquelle l'orifice d'arrosage est déporté en sens latéral par rapport à l'axe central.

Cette position déportée de l'orifice n'a de sens que si, en même temps, il est prévu un moyen provoquant un déplacement de cet orifice par rapport au café moulu.

Le moyen révélé dans ce document consiste à rendre rotatif le tube de descente d'eau chaude et à conformer l'orifice en buse en donnant à celle-ci une inclinaison afin que la réaction produite par la sortie de l'eau provoque la rotation.

Cette solution ne garantit pas un fonctionnement sûr et régulier avec une cafetière domestique courante.

Elle convient probablement avec la cafetière décrite dans le document cité parce qu'il s'agit d'un appareil de type industriel, tout au moins de capacité élevée, destiné aux restaurants. La quantité d'eau est relativement grande. Le réservoir est totalement fermé par le couvercle 6. Peut-être y a-t-il une certaine pression de la vapeur exercée sur la surface libre de l'eau. De toute façon, dans cette cafetière assez haute, il existe une pression assez grande de l'eau due à la hauteur d'eau entre le niveau des buses 22 et le niveau maximum 30 au minimum 29 de l'eau.

Dans un appareil domestique, la pression de l'eau est insuffisante et le tourniquet d'arrosage du type à réaction ne fonctionne pas de manière sûre.

L'invention a pour but principal d'apporter une cafetière automatique améliorée avec laquelle le café en poudre contenu dans le récipient destiné à cet usage est soumis dans toute sa masse à une extraction substantiellement uniforme.

Un but secondaire de l'invention est de parvenir à une cafetière améliorée comme dit ci-dessus, avec laquelle il est possible de régler facilement le degré d'extraction uniforme intéressant l'ensemble de la masse de la poudre de café.

Dans une cafetière ayant un corps avec un socle, un réservoir d'eau associé à un moyen de chauffage et supporté par le socle, un emplacement prévu sur ce socle pour recevoir une tasse, une extension horizontale du corps s'étendant en position d'utilisation au-dessus dudit emplacement, un récipient à paroi filtrante servant à contenir du café moulu et ayant un axe central substantiellement vertical pendant l'utilisation, un conduit d'arrivée d'eau chaude se terminant par un orifice de sortie d'eau s'ouvrant au-dessus dudit emplacement et déporté en sens transversal par rapport audit axe central de récipient de café moulu, conformément à l'invention la cafetière comprend en outre un organe moteur d'entraînement en rotation,

– le récipient est monté libre en rotation autour l'axe central, en-dessous de l'orifice d'arrosage déporté,

– l'orifice d'arrosage est fixe en position par rapport au corps (1) de la cafetière,

– l'organe moteur et le récipient sont accouplés en rotation et créent, pendant leur rotation, un mouvement relatif de rotation entre le café moulu et l'orifice de sortie d'eau, ledit récipient étant soit le récipient même contenant le café moulu, soit une coupelle tournante d'arrosage ouverte sous l'orifice de sortie d'eau, ayant dans son fond une ouverture d'écoulement de l'eau déportée en sens transversal par rapport à l'axe central.

Des modes de réalisation préférentiels font l'objet des revendications dépendantes.

On donnera maintenant une description de plusieurs modes de réalisation de l'invention, selon ses deux aspects, au cours de laquelle apparaîtront d'autres caractéristiques. On se reportera aux dessins annexés dans lesquels :

- la figure 1 est une vue générale schématique en élévation d'une cafetière réalisée conformément au premier aspect de l'invention, avec une partie en coupe,
- la figure 2 est une vue de dessus selon II-II de la figure 1,
- la figure 3 est une vue en élévation d'un récipient pour café moulu conforme à l'invention,
- la figure 4 est une vue analogue à la figure 3 d'un récipient à vitesse de filtration réglable selon l'invention,
- la figure 5 est une vue générale schématique en élévation avec une partie en coupe d'une cafetière réalisée conformément au deuxième aspect de l'invention, comprenant une coupelle tournante,
- la figure 6 est une vue analogue à la figure 5 montrant une variante du moyen d'entraînement en rotation de la coupelle tournante,
- la figure 7 est une vue de détail d'une variante de réalisation d'une coupelle utilisable dans l'invention,
- la figure 8 et une vue analogue à la figure 5 montrant un autre moyen d'entraînement en rotation de la coupelle tournante,
- les figures 9 et 10 sont des vues partielles agrandies respectivement en coupe par un plan transversal et de dessus montrant plus clairement le moyen d'entraînement en rotation de la coupelle tournante de la figure 7,

- les figures 11 et 12 sont des vues partielles respectivement en coupe par un plan transversal et de dessus, analogues aux figures 9 et 10, montrant une variante de réalisation du moyen d'entraînement de la coupelle tournante, la figure 12 étant plutôt schématique.

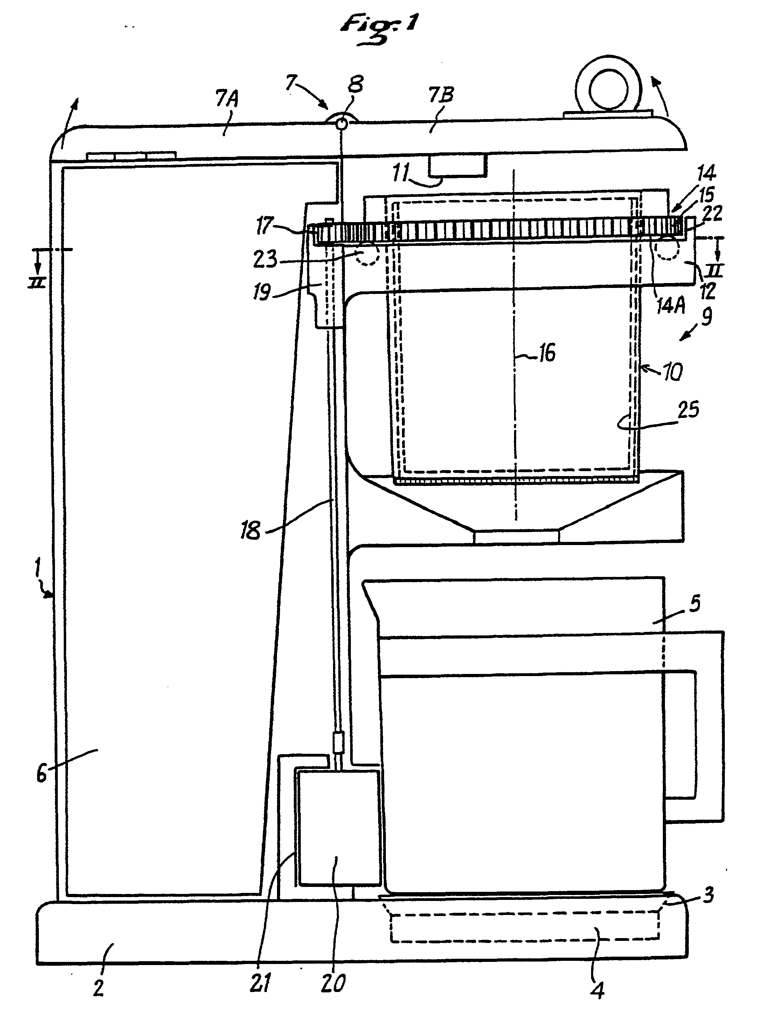

On se reportera d'abord aux figures 1 à 4 relatives au premier aspect de l'invention; on ne décrira pas en détail les pièces constitutives de la cafetière représentée quand ces pièces sont classiques et on expliquera complètement la constitution des parties de la cafetière concernées par l'invention.

La cafetière a un corps 1 avec un socle 2 et un emplacement 3 souvent muni d'un moyen de chauffage 4 pour recevoir une tasse 5. Le socle 2 est conçu pour supporter aussi un réservoir d'eau 6 associé à des moyens de chauffage (non représentés). Ce réservoir d'eau 6 s'élève jusqu'à une extension horizontale 7 du corps 1. Dans l'exemple décrit ici, cette extension 7 est composée de deux parties 7A, 7B montées pivotantes autour d'un axe central commun 8. La partie 7A sert à fermer le réservoir d'eau 6 la partie 7B de l'extension horizontale 7 du corps 1 s'étend au-dessus de l'emplacement 3, à un niveau suffisant audessus de la tasse 5 quand celle-ci est mise en place, pour ménager la hauteur nécessaire à un volume 9 destiné à un récipient 10 de café moulu.

Le couvercle 7 contient un conduit d'eau chaude qui se termine dans la face inférieure de la partie 7B de ce couvercle par un orifice de sortie d'eau chaude 11. Ainsi qu'il est connu, quand l'eau chauffée dans le réservoir d'eau 6 arrive à l'ébullition, elle est soumise à sa surface à la pression de la vapeur qui se forme et elle s'élève dans un tube plongeur qui est terminé par l'orifice 11. Sous l'effet de la pression et de la gravité elle arrive dans le récipient 10, elle traverse le café moulu qui y est contenu et elle tombe dans la tasse 5.

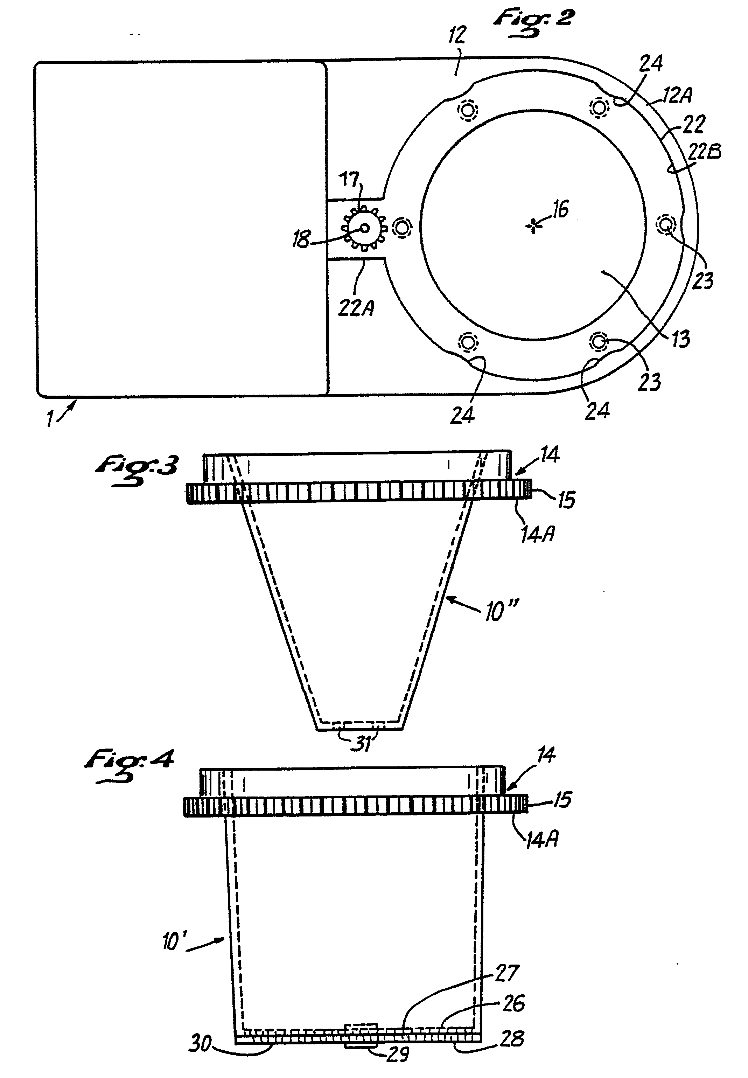

Conformément à l'invention, il est prévu dans le volume 9 un bras 12 qui fait partie du bâti général 1 et qui s'étend en porte-à-faux en-dessous de la partie 7B du couvercle 7 mis à sa position d'utilisation, à un niveau convenable au-dessus de la tasse 5. Ce bras 12 a une ouverture centrale 13, mieux visible sur la figure 2, dans laquelle on peut introduire librement par un mouvement vertical le récipient de café moulu 10. Ce dernier est pourvu à son sommet d'une collerette extérieure 14 dont une partie de la face latérale est cylindrique et porte une denture latérale 15.

Cette collerette 14 a un diamètre supérieur au diamètre du trou 13, de sorte que la face supérieure 12A du bras 12 sert à soutenir le récipient 10 par la face inférieure 14A de cette collerette 14.

Il est préférable, bien que ce ne soit pas strictement nécessaire, de donner à l'ensemble du récipient 10 un profil de révolution autour d'un axe central. Il est préférable aussi que ce dernier soit confondu avec un axe géométrique 16 de rotation qui est aussi celui de la denture latérale 15. On pourrait déporter l'un par rapport à l'autre l'axe central du récipient 10 et l'axe de rotation 16 mais sans retirer un avantage quelconque de cette complication. Il est préférable, en pratique, d'admettre que ces axes sont confondus.

Quand le récipient 10 est mis à sa place dans l'ouverture 13, la denture latérale 15 est engagée avec la denture d'un pignon 17. Ce dernier est calé en rotation à l'extrémité d'un arbre 18 qui traverse le bras 12 dans une zone 19 servant de palier et qui s'étend jusqu'à un petit moteur électrique 20 avec l'arbre duquel il est accouplé en rotation. Ce moteur 20, de préférence du type à basse tension, est abrité dans un logement 21 qui lui est destiné et qui est prévu dans le bati général 1, au-dessus du socle 2, entre l'emplacement 3 pour la tasse 5 et le réservoir d'eau 6.

Pour assurer le centrage du récipient 10 dans l'ouverture 13 et garantir le bon engrènement de la denture latérale 15 et du pignon 17, il est prévu dans la face supérieure 12A du bras 12 un évidement cylindrique 22 de profondeur suffisante pour que la partie cylindrique dentée de la collerette 14 puisse y pénétrer. L'évidement cylindrique 22 a une extension radiale 22A dans la région du pignon denté 17 pour contenir ce dernier au niveau de la denture latérale 15.

Il est préférable de donner au moteur 20 une puissance aussi faible que possible et, à cette fin, de réduire le plus possible le frottement entre le récipient 10 et le bras 12, et principalement entre la face inférieure 14A de la collerette 14 et la face supérieure 12A du bras 12 ; cette face 12A devient le fond de l'évidement 22 quand celui-ci existe. Plusieurs billes de soutien 23 sont espacées circonférentiellement autour de l'axe géométrique 16, interposées entre la face inférieure 14A et la face supérieure de soutien 12A. Ces billes 23 sont noyées partiellement et librement dans l'épaisseur du bras 12 pour n'être que faiblement saillantes et pour soutenir le récipient 10. En outre, à proximité de chaque bille 23, en sens radial par rapport à l'axe 16, la face intérieure 22B de l'évidement 22 présente un bossage saillant 24. Les bossages 24 centrent le récipient 10 coaxialement à l'axe 16 avec un contact très réduit.

Le récipient 10 peut être cylindrique dans son ensemble, avec une paroi latérale et un fond perforés par de nombreux trous pour contenir un papier ou un tissu filtrant 25 (figure 1).

Il est possible aussi d'utiliser un récipient 10' cylindrique dont seul le fond 26 a des perforations 27 (figure 4). A ce fond 26 est adjoint un deuxième fond 28 monté tournant autour d'un rivet central 29. Le deuxième fond 28 a des perforations 30 identiques aux perforations 27 et qui peuvent être mises plus ou moins exactement en coïncidence avec ces dernières, par rotation du deuxième fond 28, ce qui permet de régler le débit du café. La figure 3 montre un récipient 10'' pour café moulu, à profil tronconique, à fond percé de plusieurs trous 31.

En revenant à la figure 1, on peut constater que lorsque le récipient 10, ou 10', ou 10'', pour café moulu est mis à sa place dans la cafetière, l'orifice 11 n'est pas coaxial à l'axe de rotation 16 ; il se trouve sous l'extension horizontale 7 dans une zone qui surplombe une partie de la région comprise entre l'axe central et le bord extérieur du récipient.

Pendant l'utilisation de la cafetière, quand l'eau chaude coule par l'orifice 11, le moteur 20 fait tourner le récipient 10 et, par conséquent, la masse de café moulu que contient ce dernier. L'eau chaude arrive sur le café moulu dans une région annulaire entraînée en rotation, de sorte qu'il se produit nécessairement une bonne répartition de cette eau dans l'ensemble de la masse du café moulu. On notera que l'orifice 11 pourrait, dans le cadre de l'invention, être allongé dans le sens transversal du récipient 10, pour s'étendre presque sur la totalité d'un rayon ou d'un diamètre de ce récipient ; il pourrait comprendre aussi plusieurs fentes radiales espacées angulairement se rejoignant ou ne se rejoignant pas dans une zone coaxiale à l'axe de rotation du récipient de café moulu.

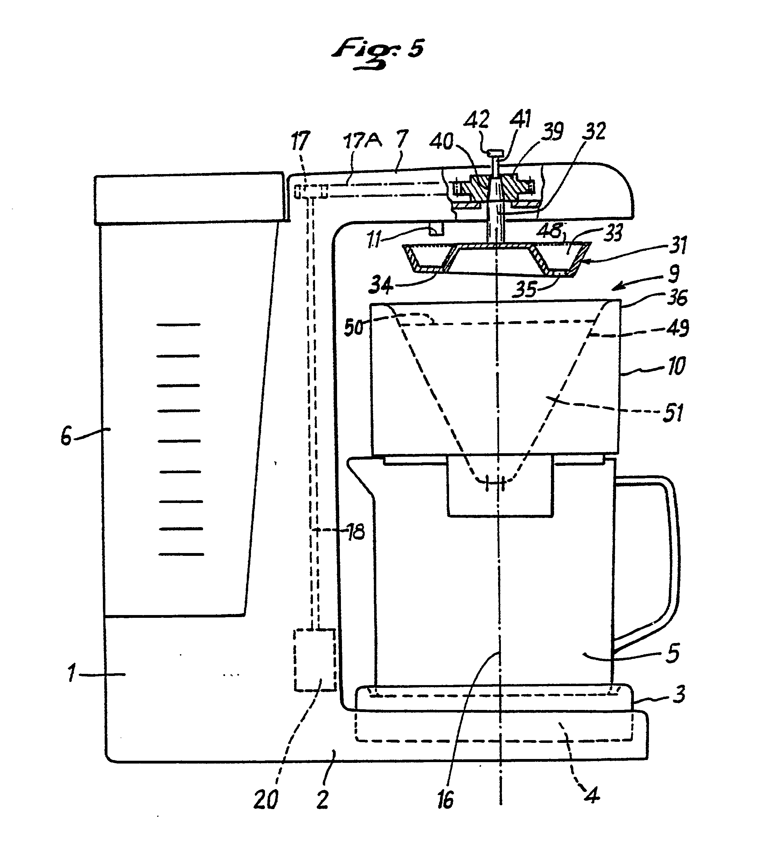

On se reportera maintenant aux figures 5 à 12 qui illustrent le deuxième aspect de l'invention. On décrira d'abord les exemples de réalisation des figures 5 à 7. Les pièces identiques ou équivalentes celles de l'exemple de réalisation des figures 1 à 4 sont désignées par les mêmes références numériques que sur ces dernières figures. On ne décrira pas à nouveau les pièces communes aux deux aspects de l'invention ; on se bornera à expliquer les différences et leur raison d'être.

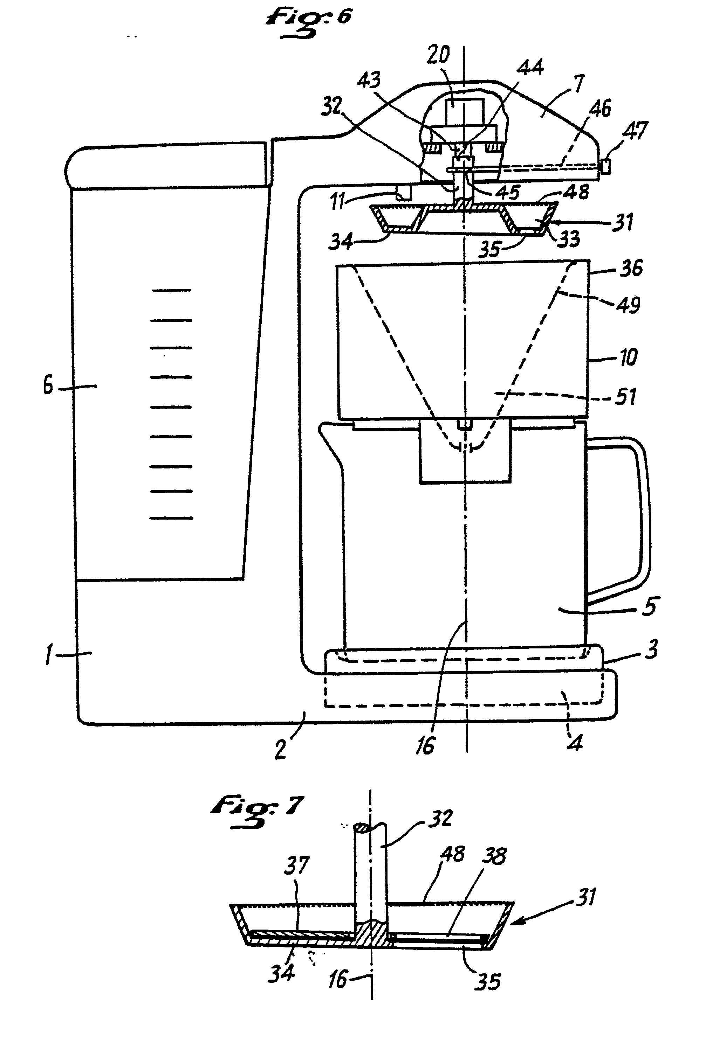

Sur les figures 5 et 6, dans le volume 9, il n'existe plus de bras 12 pour soutenir le récipient 10 de café moulu. Ce récipient 10 est posé directement sur la tasse 5 ou sur un récipient analogue. On notera qu'il serait possible, quand même, de conserver le bras 12 pour qu'il serve à porter le récipient 10 de café moulu au-dessus de la tasse 5.

L'extension horizontale 7 du corps 1 est rigide, c'est-à-dire dépourvue de l'axe de pivotement 8 de la figure 1 ; mais, ici aussi, cet axe 8 pourrait exister pour la raison expliquée plus haut en référence à la figure 1.

De toute façon, il est prévu entre le sommet du récipient 10 de café moulu et l'extension horizontale 7 un intervalle suffisant à la mise en place d'une coupelle 31 qui est munie d'un arbre central 32 par lequel elle peut être suspendue, ou supportée, et par lequel elle peut aussi être guidée en rotation. Cette coupelle est une coupelle tournante d'arrosage et dans l'exemple des figures 5, 6 l'arbre central 32 est un arbre de suspension qui s'étend jusque dans l'extension horizontale 7 où cet arbre est fixé de manière détachable à un moyen d'entraînement en rotation.

La coupelle 31 et son arbre de suspension 32 ont un axe géométrique de symétrie qui est, de préférence, confondu pendant l'utilisation avec l'axe géométrique 16 du récipient 10. Il est évident que des écarts entre les deux axes sont admissibles tant que le fonctionnement de la cafetière reste satisfaisant. Comme précédemment, l'orifice 11 du conduit d'arrivée d'eau chaude n'est pas situé sur l'axe de la coupelle 31 ; il est déporté en sens radial et il se trouve au-dessus du volume creux 33 ouvert vers le haut de cette coupelle ce volume creux 33 entoure l'arbre de suspension 32, de préférence concentriquement, et il a une paroi de fond 34 dans laquelle est prévue une ouverture 35 d'écoulement libre de l'eau chaude. Pendant l'utilisation de la cafetière l'ouverture 35 se trouve située, en sens vertical, au-dessus d'une zone d'arrosage du café moulu située entre la zone centrale entourant immédiatement l'axe 16 et le bord extérieur 36 du récipient 10 de café moulu.

Dans l'exemple de la figure 5, le volume creux 33 de la coupelle 31 est analogue à celui d'une auge annulaire espacée en sens radial de l'arbre central de suspension 32 concentrique à ce dernier. L'ouverture 35 est un trou percé dans le fond 34 de cette auge.

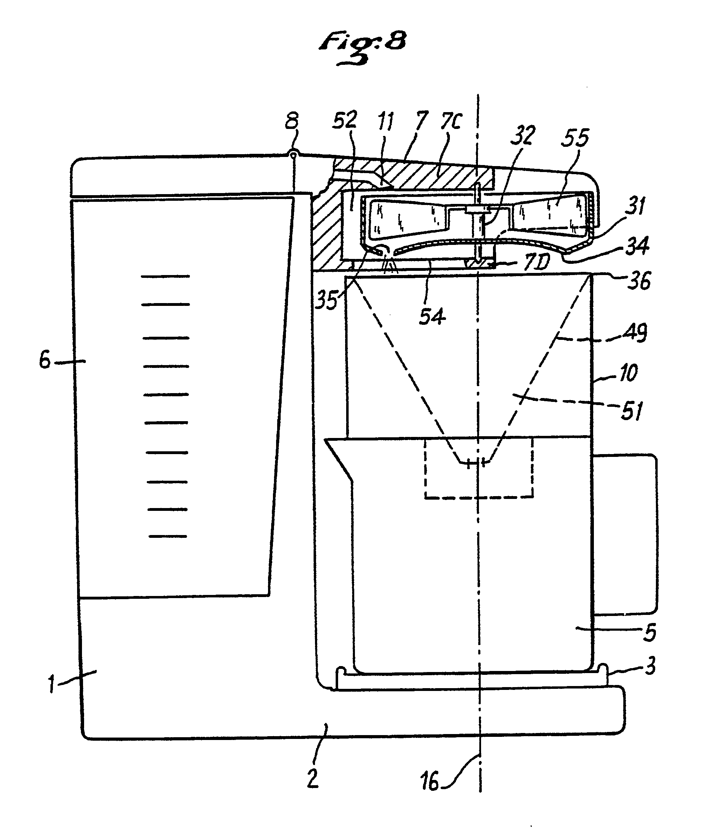

Dans l'esprit de l'invention, il est préférable que la zone d'arrosage du café moulu s'étende le plus possible entre la zone centrale entourant l'axe 16 et le bord supérieur extérieur 36 du récipient 10. Il est donc avantageux de donner au bord extérieur de la coupelle 31 un diamètre égal ou presque égal à celui de la surface utile du récipient 10. La figure 7 montre une coupelle 31 dans laquelle l'ouverture d'écoulement 35 est une fente radiale ; cette dernière pourrait être remplacée par une succession de trous individuels s'éloignant successivement de l'arbre 32 sur un même rayon ou sur des rayons différents. La figure 7 montre aussi qu'il est possible de régler la section de passage de l'ouverture d'écoulement 35 au moyen d'une rondelle 37 entourant librement l'arbre de suspension 32 et reposant sur le fond de la coupelle 31. Cette rondelle 37 a aussi une ouverture 38 de même configuration et de même grandeur, au moins, que l'ouverture d'écoulement 35. Selon que les ouvertures 35 et 38 sont exactement en coïncidence ou non le débit de l'eau chaude est différent.

Il est possible de monter la coupelle 31 sur la cafetière pour qu'elle se trouve dans un plan parfaitement horizontal, perpendiculaire à l'arbre de suspension 32 et à l'axe 16. Il est avantageux, comme on peut le voir sur les figures 5 à 7, de donner à la coupelle 31, ou au moins à son fond 34, une inclinaison qui fait apparaître une pente en direction de l'ouverture d'écoulement 35. Ainsi dès que les premières gouttes d'eau chaude tombent de l'orifice 11 dans la coupelle 31 elles se dirigent aussitôt vers l'ouverture 35.

Sur la figure 5 on retrouve le moteur électrique 20, l'arbre 18 et le pignon 17 de la cafetière de la figure 1. A l'intérieur de l'extension horizontale 7 est logée libre en rotation une roue dentée 39, concentriquement à l'axe 16 ; cette roue 39 est réunie fonctionnellement au pignon 17 par une courroie crantée 17A, à l'intérieur de l'extension 7. La roue dentée 39 a une ouverture centrale tronconique 40 à laquelle correspond sur l'arbre de suspension 32 de la coupelle 31 une partie tronconique correspondante que l'on peut coincer, par un mouvement d'engagement du bas vers le haut dans ladite ouverture tronconique 40. Ainsi la coupelle 31 est accouplée en rotation avec la roue dentée 39 et suspendue en-dessous de l'extension horizontale 7. Dans celle-ci est prévu concentriquement à l'axe 16 un trou dans lequel on peut engager une tige 41 terminée par un bouton 42. La tige 41 s'appuie sur la face extrême de l'arbre de suspension 32 et permet de dégager ce dernier de la roue dentée 39 quand on désire retirer la coupelle 31.

Sur la figure 6 le moteur 20 est logé directement à l'intérieur de l'extension horizontale 7 qui a été modifiée en conséquence. Ce moteur 20 est concentrique à l'axe 16 avec son arbre moteur 43 dirigé vers le bas ainsi qu'une coupe partielle le laisse voir. La face extrême de l'arbre 43 du moteur 20 et la face extrême de l'arbre 32 de la coupelle 31 sont munis de moyens de crabotage complémentaires 44 et il existe à proximité de cette face extrême une gorge annulaire 45 creusée dans l'arbre 32. Dans cette gorge 45 peut s'engager une tige de suspension 46 qui coulisse dans un logement correspondant prévu dans l'extension 7 et qui se termine par un bouton de manoeuvre 47. La tige 46 s'engage dans la gorge 45 et tient suspendue la coupelle 31 quand les moyens de crabotage sont engagés ensemble. Ainsi la coupelle 31 est suspendue et accouplée et guidée en rotation par l'arbre 32.

D'autres moyens équivalents du genre de ceux qui sont connus dans les appareils de cuisine à outils interchangeables peuvent être employés pour le montage de la coupelle 31.

Dans certaines circonstances, quand l'eau chaude sort sous pression, ou avec de la vapeur, par l'orifice 11, elle risque de rejaillir hors de la coupelle 31 ; dans ce cas, il est prévu de couvrir le volume creux 33 de cette dernière d'une grille à mailles fines 48.

Avec un filtre 49 de configuration conique la face supérieure 50 du café moulu 51 change de diamètre avec le volume de ce café moulu qui dépend lui-même du nombre de tasses de café à préparer. Il est alors judicieux de prévoir l'emploi de la coupelle 31 de la figure 7 pourvue d'une rondelle mobile 37 ayant respectivement des ouvertures 35 et 38 coopérantes mutuellement et permettant de choisir la position ou l'extension en sens radial par rapport à l'axe 16 de l'ouverture effective d'écoulement de l'eau chaude. Ce résultat peut s'obtenir soit par des trous que la rondelle 37 permet de découvrir successivement, soit par un seul trou allongé radialement de largeur croissante, progressivement découverte à l'aide de la rondelle 37.

On se reportera maintenant aux figures 8 à 12 pour décrire une variante de réalisation du moyen d'entraînement en rotation de la coupelle tournante d'arrosage 31 utilisable dans les cafetières conformes au second aspect de l'invention. On utilisera les mêmes références numériques que celles des exemples des figures 1 à 7 pour désigner les pièces identiques ou équivalentes et on se limitera à expliquer comment la coupelle 31 et son moyen d'entraînement diffèrent dans les exemples des figures 8 à 12 des exemples déjà décrits.

La figure 8 montre que l'extension horizontale 7 a une dimension plus importante en épaisseur, en sens vertical, pour pouvoir contenir un logement 52. Ce dernier est limité, en partie, par une paroi supérieure 7C et par une paroi inférieure 7D qui s'étendent au-delà de l'axe géométrique 16, perpendiculairement à ce dernier.

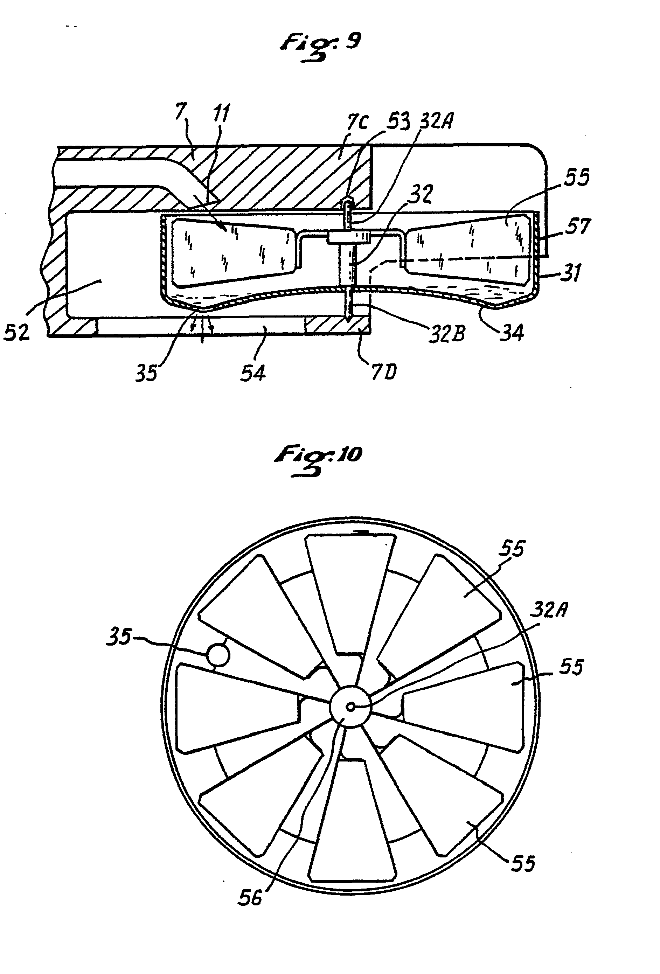

Les deux parois 7C, 7D sont suffisamment espacées en sens vertical pour contenir entre elles une coupelle 31 et l'arbre 32 de cette dernière. L'arbre 32 est introduit par ses extrémités opposées d'une part dans la paroi supérieure 7C, d'autre part dans la paroi inférieure 7D, qui jouent le rôle de paliers. Un moyen de maintien en position de l'arbre 32, identique ou analogue à celui qui a été décrit en référence à la figure 6 peut être employé pour permettre la mise en place et le remplacement facile de la coupelle 31. La figure 9 montre que l'arbre 32 peut avoir des parties extrêmes opposées 32A, 32B plus minces et relativement souples qui facilitent ces opérations de mise en place et de remplacement de la coupelle 31. En outre, pour la même raison, le trou 53 prévu dans la paroi supérieure 7C pour recevoir la partie extrême 32A de l'arbre 32 a une longueur supérieure à celle de cette partie extrême.

La coupelle 31 a un fond 34 avec une ouverture 35 et elle peut comporter toutes les variantes déjà décrites plus haut. La paroi inférieure 7 D a elle-même une large ouverture 54 au moins en-dessous de la zone dans laquelle est déplacée l'ouverture 35 d'écoulement de l'eau chaude de façon à gêner le moins possible la chute de cette eau dans le récipient 10 de café moulu. En outre la coupelle 31 est pourvue intérieurement d'un jeu d'ailettes 55 disposées radialement par rapport à l'arbre 32 et espacées en sens circulaire autour de ce dernier. Le conduit d'arrivée d'eau chaude a son orifice 11 ouvert à la face inférieure de la paroi supérieure 7C en direction des ailettes 55. Celles-ci sont inclinées par rapport à la verticale et l'orifice 11 est incliné de manière correspondante pour que le jet des ailettes 55 se comporte comme les aubes d'une turbine et l'orifice 11 comme une tuyère de turbine.

Sur les figures 9 et 10 les ailettes 55 sont directement fixées à un moyeu 56 calé en rotation sur l'arbre 32 qui est lui-même fixé au fond 34 de la coupelle 31. Les ailettes 55 sont donc espacées du fond 34 et de la paroi latérale 57 de la coupelle.

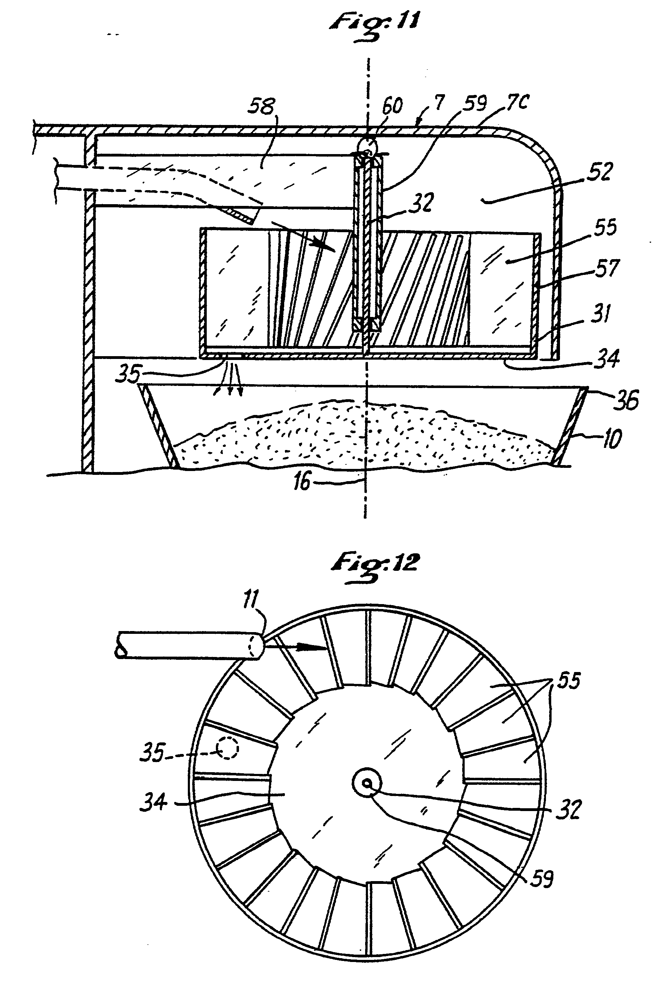

Dans la variante illustrée par les figures 11 et 12 l'extension horizontale 7 est creuse et contient le logement intérieur 52 mais la paroi inférieure 7D des figures 8, 9 n'existe plus de sorte que ce logement 52 est totalement ouvert vers le bas. Dans ce logement 52, en-dessous de la paroi supérieure 7C un bras 58 porte un élément tubulaire 59 de faible diamètre intérieur, disposé concentriquement à l'axe géométrique 16. L'arbre 32 de la coupelle 31 part du centre du fond 34 de celle-ci et il est prolongé au-delà du bord supérieur de la paroi latérale 57. Pendant l'utilisation l'arbre 32 est introduit dans l'élément tubulaire 59 et il s'élève jusqu'au-dessus de ce dernier dans l'espace existant entre cet élément 59 et la paroi supérieure 7C. Un moyen de retenue quelconque convenable 60 retient l'arbre 32 au-dessus de l'élément tubulaire 59 en le laissant libre en rotation. Ainsi l'arbre 32 permet de suspendre et de guider en rotation la coupelle 31.

On notera que l'élément tubulaire 59 pourrait faire partie de la paroi supérieure 7C et s'étendre vers le bas à partir de celle-ci, le bras 58 n'existant plus. L'arbre 32 pourrait traverser la paroi supérieure 7C et être suspendu libre en rotation par un moyen de retenue 60 situé au-dessus de cette paroi 7C.

Les ailettes 55 sont indépendantes de l'arbre 32 ; elles sont fixées à la paroi latérale 57 avec une inclinaison qui est en correspondance avec celle de l'orifice 11 comme expliqué plus haut. Dans cet exemple aussi le fond 34 de la coupelle 31 peut être modifié selon diverses variantes ainsi qu'on l'a dit plus haut.

Avec les exemples de réalisation des figures 8 à 11, pendant l'utilisation de la cafetière, l'eau chaude qui sort sous pression par l'orifice 11 frappe les ailettes 55 et fait tourner la coupelle 31. Ensuite elle se répand sur le fond 34 et elle tombe par l'orifice 35, pendant la rotation de la coupelle, sur le café moulu contenu dans le récipient 10.

**Revendications**

1. Cafetière ayant un corps (1) avec un socle (2), un réservoir d'eau (6) associé à un moyen de chauffage et supporté par le socle (2), un emplacement (3) prévu sur ce socle (2) pour recevoir une tasse (5), une extension horizontale (7) du corps (1) s'étendant en position d'utilisation au-dessus dudit emplacement (3), un récipient (10) à paroi filtrante servant à contenir du café moulu et ayant un axe central (16) substantiellement vertical pendant l'utilisation, un conduit d'arrivée d'eau chaude se terminant par un orifice de sortie d'eau (11) s'ouvrant au-dessus dudit emplacement (3) et déporté en sens transversal par rapport audit axe central (16) du récipient (10) de café moulu, caractérisée en ce que cette cafetière comprend en outre un organe moteur d'entraînement en rotation (20, 55), et en ce que
   – le récipient (10, 31) est monté libre en rotation autour de l'axe central (16), en-dessous de l'orifice d'arrosage déporté (11),
   – l'orifice d'arrosage est fixe en position par rapport au corps (1) de la cafetière
   – l'organe moteur et le récipient sont accouplés en rotation et créent, pendant leur rotation, un mouvement relatif de rotation entre le café moulu et l'orifice de sortie d'eau (11), ledit récipient étant soit le récipient (10) même contenant le café moulu, soit une coupelle tournante d'arrosage ouverte sous l'orifice de sortie d'eau (11), ayant dans son fond une ouverture (35) d'écoulement de l'eau déportée en sens transversal par rapport à l'axe central (16).

2. Cafetière selon la revendication 1, caractérisée en ce qu'il est prévu en-dessous de l'extension horizontale (7) un moyen de soutien (12) par lequel le récipient (10) de café moulu est supporté pour pouvoir tourner autour de son axe central (16) en étant disposé de façon que l'orifice (11) du conduit d'arrivée d'eau chaude se trouve dans une zone surplombant au moins partiellement au moins la région comprise entre ledit axe central (16) et le bord supérieur extérieur (36) de ce récipient (10), cependant que l'organe moteur d'entraînement en rotation est un moteur électrique (20 supporté par le corps (1) et accouplé fonctionnellement en rotation avec le récipient (10) de café moulu.

3. Cafetière selon la revendication 2, caractérisée en ce que l'orifice (11) est allongé en sens transversal au récipient (30) de café moulu et s'étend dans une zone surplombant une région comprise entre deux points opposés en sens transversal du bord extérieur (36) de ce récipient (10).

4. Cafetière selon la revendication 2, caractérisée en ce que le récipient (10) de café moulu a une collerette périphérique extérieure prévue pour coopérer avec le moyen de soutien (12) et une collerette à denture (15) concentrique audit axe (16) pour son accouplement fonctionnel avec le moteur d'entraînement en rotation (20).

5. Cafetière selon la revendication 4, caractérisée en ce que le moyen de soutien (12) est un bras s'étendant à partir du corps (1) avec une ouverture (13) capable de contenir librement le récipient (10) de café moulu, celui-ci ayant à sa partie supérieure une collerette (14) qui porte la denture latérale (15), cette collerette (14) étant soutenue pendant l'utilisation par la face supérieure (12A) du bras (12).

6. Cafetière selon la revendication 5, caractérisée en ce que le moteur électrique (20) est logé dans le socle (2) et un arbre (18) s'étend jusqu'à traverser le bras (12) qui constitue un palier (19) et il est pourvu au-dessus du niveau de la face supérieure (12A) de ce bras (12) d'un pignon denté (17) apte à engrener avec la denture latérale (15).

7. Cafetière selon la revendication 6 caractérisée en ce que la face supérieure (12A) du bras (12) présente un évidement (22) dans lequel pénètre pendant l'utilisation la denture latérale (15) de la collerette (14) du récipient (10) de café moulu.

8. Cafetière selon la revendication 7, caractérisée en ce que des billes (23) sont interposées entre la face supérieure (12A) du bras de soutien (12) et la face inférieure de la collerette (14).

9. Cafetière selon la revendication 7, caractérisée en ce que des bossages (24) saillants en sens radial en direction de l'axe de rotation (16) sont prévus dans la face latérale intérieure (22A) de l'évidement (22).

10. Cafetière selon la revendication 1, caractérisée en ce que la coupelle d'arrosage (31) est placée dans l'ensemble dans un plan horizontal au-dessus du récipient (10) de café moulu et elle comprend un arbre central vertical (32) par lequel elle est montée et guidée en rotation sur le corps (1).

11. Cafetière selon la revendication 10 caractérisée en ce que l'ouverture d'écoulement libre (35) est constituée par plusieurs trous successifs espacés les uns des autres en sens radial à partir de l'axe central (16).

12. Cafetière selon la revendication 10, caractérisée en ce que l'ouverture d'écoulement libre (35) est constituée par une fente (35) allongée en sens radial au-dessus de la zone d'arrosage étendue entre l'arbre (32) de la coupelle (31) et la paroi latérale extérieure de celle-ci.

13. Cafetière selon la revendication 10, caractérisée en ce que le moteur d'entraînement en rotation de la coupelle d'arrosage (31) est un moteur électrique logé dans le corps (1) et accouplé fonctionnellement à l'arbre central (32) de cette coupelle.

14. Cafetière selon la revendication 13, caractérisée en ce qu'une roue dentée (39) est montée libre en rotation à l'intérieur de l'extension horizontale (7) et elle est réunie fonctionnellement au moteur (20) logé dans le corps (1), cette roue dentée (39) ayant une ouverture centrale tronçonique (40) et l'arbre (32) de la coupelle (31) ayant une partie extrême tronçonique complémentaire à l'aide de laquelle ladite coupelle (31) peut être suspendue et accouplée en rotation à cette roue dentée (39).

15. Cafetière selon la revendication 14, caractérisée en ce que l'extension horizontale (7) contient le moteur électrique (20) avec son arbre moteur (43) dirigé vers le bas et muni sur sa face extrême de moyens de crabotage (44) cependant que l'arbre (32) de la coupelle (31) a sur sa face extrême des moyens de crabotage complémentaires et à proximité de ladite face extrême une gorge annulaire (45) apte à coopérer avec une tige de suspension (46) supportée par l'extension horizontale (7).

16. Cafetière selon la revendication 10, caractérisée en ce que la coupelle (31) contient une rondelle (37) reposant sur son fond (34), réglable en position autour de l'arbre (32) et ayant une ouverture (38) coopérant avec l'ouverture d'écoulement (35) pour le réglage de l'eau sortant de la coupelle (31).

17. Cafetière selon la revendication 10, caractérisée en ce que le moteur d'entraînement en rotation est constitué par un jeu d'ailettes intérieures (55) fixées radialement à l'arbre (32) et espacées circulairement avec une inclinaison complémentaire à la disposition de l'orifice (11) qui est ouvert en direction desdites ailettes à la façon d'une tuyère de turbine de sorte que, pendant l'utilisation, l'eau chaude fournit l'énergie nécessaire à la rotation de la coupelle (31).

18. Cafetière selon la revendication 17, caractérisée en ce que l'extension horizontale (7) a un logement intérieur (52) limité par une paroi supérieure (7C) et une paroi inférieure (7D) perpendiculaires à l'axe (16) du récipient (10) et s'étendant au-delà de cet axe, l'arbre (32) de la coupelle (31) a deux parties extrêmes opposées (32A, 32B) qui sont contenues respectivement dans des trous ménagés dans lesdites parois supérieure (7C) et inférieure (7D) servant de palier, la paroi inférieure (7D) ayant une large ouverture (54) en-dessous de la zone dans laquelle est déplacée l'ouverture (35) d'écoulement de l'eau chaude à partir de la coupelle (31) pendant la rotation de cette dernière.

19. Cafetière selon la revendication 17, caractérisée en ce que l'extension horizontale (7) a un logement intérieur (52) limité par une paroi supérieure (7C), ouvert vers le bas et dans lequel il existe un élément tubulaire (59) concentrique à l'axe (16) cependant que l'arbre (32) de la coupelle (31) s'étend dans cet élément tubulaire (59) et s'élève jusqu'au-dessus de ce dernier où il est retenu libre en rotation par un moyen de retenue (60).

**Claims**

A coffee making machine having a body (1) with a base (2), a water reservoir (6) associated with a heating means and supported by the base (2), a location (3) on said base (2) for receiving a cup (5), a horizontal extension (7) of the body (1) extending in the position of use above said location (3), a container (10) with a filter wall serving to contain ground coffee and having a central axis (16) which is substantially vertical in use, a hot water supply conduit which terminates with a water outlet orifice (11) which opens above said location (3) and which is displaced in a transverse direction with respect to said central axis (16) of the ground coffee container (10), characterised in that said coffee making machine further comprises a rotary drive motor member (20, 55) and that
— the container (10, 31) is mounted freely rotatably about the central axis (16) below the displaced watering orifice (11),
— the watering orifice is fixed in position with respect to the body (1) of the coffee making machine, and
— the motor member and the container are coupled for rotary movement and during their rotation produce a relative rotary movement between the gound coffee and the water outlet orifice (11) , said container being either the actual container (10) which contains the ground coffee or a rotating watering dish member which is open under the water outlet orifice (11) and having in its bottom an opening (35) for discharge of the water, the opening being displaced in the transverse direction with respect to the central axis (16).

2. A coffee making machine according to claim 1 characterised in that provided below the horizontal extension (7) is a support means (12) by which the ground coffee container (10) is supported so as to be able to turn about its central axis (16) while being disposed in such a way that the orifice (11) of the hot water supply conduit is in a zone which at least partially overhangs at least the region between said central axis (16) and the upper outside edge (36) of said container (10), while the rotary drive motor member is an electric motor (20) which is supported by the body (1) and which is operatively coupled for rotary movement to the ground coffee container (10).

3. A coffee making machine according to claim 2 characterised in that the orifice (11) is elongated in a direction transverse to the ground coffee container (10) and extends in a zone which overhangs a region between two points which are disposed in opposite relationship in the transverse direction of the outside edge (36) of said container (10).

4. A coffee making machine according to claim 2 characterised in that the ground coffee container (10) has an outside peripheral flange for co-operating with the support means (12) and a flange with a tooth arrangement (15) which is concentric with said axis (16) for operative coupling thereof to the rotary drive motor (20).

5. A coffee making machine according to claim 4 characterised in that the support means (12) is an arm extending from the body (1) with an opening (13) capable of freely containing the ground coffee container (10), the latter being provided in its upper part with a flange (14) which carries the lateral tooth arrangement (15), said flange (14) being supported in use by the upper face (12a) of the arm (12).

6. A coffee making machine according to claim 5 characterised in that the electric motor (20) is accomodated in the base (2) and a shaft (18) extends to a position at which it passes through the arm (12) which constitutes a bearing (19) and it is provided above the level of the upper face (12A) of said arm (12) with a toothed pinion (17) capable of meshing with the lateral tooth arrangement (15).

7. A coffee making machine according to claim 6 characterised in that the upper face (12A) of the arm (12) has a recess (22) into which the lateral tooth arrangement (15) of the flange (14) on the ground coffee container (10) penetrates in use.

8. A coffee making machine according to claim 7 characterised in that balls (23) are interposed between the upper face (12A) of the support arm (12) and the lower face of the flange (14).

9. A coffee making machine according to claim 7 characterised in that bosses (24) projecting in a radial direction towards the axis of rotation (16) are provided in the inside lateral face (22A) of the recess (22).

10. A coffee making machine according to claim 1 characterised in that the watering dish member (31) is disposed generally in a horizontal plane above the ground coffee container (10) and it comprises a vertical central shaft (32) by means of which it is mounted and guided for rotary movement on the body (1).

11. A coffee making machine according to claim 10 characterised in that the free discharge flow opening (35) is formed by a plurality of successive holes which are spaced from each other in a radial direction from the central axis (16).

12. A coffee making machine according to claim 10 characterised in that the free discharge flow opening (35) is formed by a slot (35) which is elongated in a radial direction above the watering zone extending between the shaft (32) of the dish member (31) and the outside lateral wall of the latter.

13. A coffee making machine according to claim 10 characterised in that the motor for driving the watering dish member (31) in rotation is an electric motor which is housed in the body (1) and which is operatively coupled to the central shaft (32) of the dish member.

14. A coffee making machine according to claim 13 characterised in that a toothed wheel (39) is freely rotatably mounted within the horizontal extension (7) and is operatively connected to the motor (20) which is accomodated in the body (1), said toothed wheel (39) having a central frustoconical opening (40) and the shaft (32) of the dish member (31) having a complementary frustoconical end portion, by means of which said dish member (31) can be suspended from and rotatably coupled to said toothed wheel (39).

15. A coffee making machine according to claim 14 characterised in that the horizontal extension (7) contains the electric motor (20) with its motor shaft (43) which is directed downwardly and provided on its end face with dog engagement means (44) while the shaft (32) of the dish member (31) is provided on its end face with complementary dog engagement means and in the vicinity of said end face with an annular groove (45) co-operable with a suspension rod (46) supported by the horizontal extension (7).

16. A coffee making machine according to claim 10 characterised in that the dish member (31) contains a disc (37) which rests on its bottom (34) and which is adjustable in position about the shaft (32) and which has an opening (38) co-operating with the discharge opening (35) for regulating the water issuing from the dish member (31).

17. A coffee making machine according to claim 10 characterised in that the rotary drive motor is formed by a set of internal blades (55) which are fixed radially to the shaft (32) and which are spaced in a circular array at an angle of inclination which is complementary to the positioning of the orifice (11) which is open in the direction of said blades in the manner of a turbine nozzle in such a way that in use the hot water provides the energy required for rotation of the dish member (31).

18. A coffee making machine according to claim 17 characterised in that the horizontal extension (7) has an internal housing (52) delineated by an upper wall (7C) and a lower wall (7D) which are perpendicular to the axis (16) of the container (10) and which extend beyond said axis, the shaft (32) of the dish member (31) has two oppositely disposed end portions (32A, 32B) which are respectively contained in holes provided in said upper and lower walls (7C, 7D) serving as bearing means, the lower wall (7D) having a wide opening (54) below the zone in which the opening (35) for discharge of the hot water from the dish member (31) is displaced during the rotary movement of the dish member (31).

19. A coffee making machine according to claim 17 characterised in that the horizontal extension (7) has an internal housing (52) which is delineated by an upper wall (7C), which is open downwardly and in which there is disposed a tubular element (59) which is concentric with the axis (16) while the shaft (32) of the dish member (31) extends in said tubular element (59) and rises to a position above the tubular element where it is freely rotatably by retaining means (60).

**Patentansprüche**

1. Kaffeemaschine, umfassend ein Gehäuse (1) mit einem Sockel (2), einen Wasserbehälter (6), der mit einer Heizeinrichtung verbunden und auf dem Sockel (2) abgestützt ist, eine auf dem Sockel (2) vorgesehene Stellfläche (3) zum Aufnehmen einer Tasse (5), einen horizontalen Fortsatz (7) des Gehäuses (1) der sich in seiner Gebrauchsstellung über die Stellfläche (3) erstreckt, ein mit einer Filterwandung ausgebildetes Gefäß (10), das zur Aufnahme von gemahlenem Kaffee dient und eine während des Gebrauchs im wesentlichen vertikale Zentralachse (16) hat, eine Leitung zum Zuführen von warmem Wasser, die an einer über der Stellfläche (3) sich öffnenden und quer zur Zentralachse (16) des Gefäßes (10) für den gemahlenen Kaffee versetzten Wasseraustrittsöffnung (11) endet, dadurch gekennzeichnet, daß die Kaffeemaschine ferner ein Antriebsorgan für einen Drehantrieb (20, 55) umfaßt, und daß

– das Gefäß (10, 31) unterhalb der versetzten Berieselungsöffnung (11) frei drehbar um die Zentralachse (16) gelagert ist,

– die Berieselungsöffnung bezüglich des Gehäuses (1) der Kaffeemaschine in ihrer Position fixiert ist,

– das Antriebsorgan und das Gefäß für eine Drehbewegung aneinander gekuppelt sind und während ihrer Drehung eine relative Drehbewegung zwischen dem gemahlenen Kaffee und der Wasseraustrittsöffnung (11) bewirken, wobei das Gefäß entweder das den gemahlenen Kaffee selbst enthaltende Gefäß (10) ist oder eine drehbare, unterhalb der Wasseraustrittsöffnung (11) sich öffnende Berieselungsschale ist, die in ihrem Boden eine quer zur Zentralachse (16) versetzte Öffnung (35) für den Wasserablauf hat.

2. Kaffeemaschine nach Anspruch 1, dadurch gekennzeichnet, daß unterhalb des horizontalen Fortsatzes (7) eine Haltevorrichtung (12) vorgesehen ist, durch die das Gefäß (10) für den gemahlenen Kaffee drehbar um seine Zentralachse (16) abgestützt und derart angeordnet ist, daß die Öffnung (11) der Leitung für den Zulauf des warmen Wassers sich in einer Zone befindet, die zumindest teilweise einen von der Zentralachse (16) und dem oberen äußeren Rand (36) des Gefäßes (10) eingeschlossenen Bereich überdeckt, während das Antriebsorgan für die Drehbewegung ein am Gehäuse (1) gelagerter und funktionsmäßig drehbar an das Gefäß (10) angekuppelter Elektromotor (20) ist.

3. Kaffeemaschine nach Anspruch 2, dadurch gekennzeichnet, daß die Öffnung (11) quer zum Gefäß (10) für den gemahlenen Kaffee verlängert ist und sich in eine Zone erstreckt, die einen Bereich überdeckt, der zwischen zwei sich in Querrichtung gegenüberliegenden Punkten des Außenrandes (36) des Gefäßes (10) eingeschlossen ist.

4. Kaffeemaschine nach Anspruch 2, dadurch gekennzeichnet, daß das Gefäß (10) für den gemahlenen Kaffee einen umlaufenden äußeren Flansch, der zum Zusammenwirken mit der Haltevorrichtung (12) vorgesehen ist, und einen zur Achse (16) konzentrischen gezahnten Rand (15) zum funktionsmäßigen Ankuppeln an den Motor des Drehantriebs (20) hat.

5. Kaffeemaschine nach Anspruch 4, dadurch gekennzeichnet, daß die Haltevorrichtung (12) ein Arm ist, der sich von dem Gehäuse (1) weg mit einer die freie Aufnahme des Gefäßes (10) für den gemahlenen Kaffee gestattenden Öffnung (13) erstreckt, wobei das Gefäß (10) an seinem oberen Abschnitt einen die Seitenverzahnung (15) tragenden Flansch (14) hat, welcher während des Betriebs von der Oberseite (12A) des Arms (12) abgestützt wird.

6. Kaffeemaschine nach Anspruch 5, dadurch gekennzeichnet, daß der Elektromotor (20) in den Sockel (2) eingebaut ist und daß sich eine Welle (18) bis zum Hindurchtreten durch den ein Wellenlager (19) bildenden Arm (12) erstreckt und oberhalb des Niveaus der Oberseite (12A) des Arms (12) mit einem mit der Seitenverzahnung (15) kämmenden gezahnten Ritzel (17) versehen ist.

7. Kaffeemaschine nach Anspruch 6, dadurch gekennzeichnet, daß die Oberseite (12A) des Arms (12) eine Vertiefung (22) hat, in die während des Betriebs die Seitenverzahnung (15) des Flansches (14) des den gemahlenen Kaffee aufnehmenden Gefäßes (10) eintaucht.

8. Kaffeemaschine nach Anspruch 7, dadurch gekennzeichnet, daß Lagerkugeln (23) zwischen der Oberseite (12A) des Arms der Haltevorrichtung (12) und der Unterseite des Flansches (14) vorgesehen sind.

9. Kaffeemaschine nach Anspruch 7, dadurch gekennzeichnet, daß radial in Richtung der Rotationsachse (16) vorstehende Rundungen (24) an der inneren Seitenfläche (22A) der Vertiefung (22) vorgesehen sind.

10. Kaffeemaschine nach Anspruch 1, dadurch gekennzeichnet, daß die Berieselungsschale (31) vollständig in einer horizontalen Ebene oberhalb des Gefäßes (10) für den gemahlenen Kaffee angeordnet ist und eine zentrale vertikale Welle (32) umfaßt, mit deren Hilfe sie drehbar an dem Gehäuse (1) gehalten und geführt ist.

11. Kaffeemaschine nach Anspruch 10, dadurch gekennzeichnet, daß die Öffnung für den freien Ablauf (35) durch mehrere aufeinanderfolgende, jeweils ausgehend von der Zentralachse (16) radial voneinander beabstandete Löcher gebildet wird.

12. Kaffeemaschine nach Anspruch 10, dadurch gekennzeichnet, daß die Öffnung für den freien Ablauf (35) durch einen radial sich erstreckenden Schlitz (35) oberhalb der Berieselungszone gebildet ist, die sich zwischen der Welle (32) der Schale (31) und deren seitlicher Außenwand erstreckt.

13. Kaffeemaschine nach Anspruch 10, dadurch gekennzeichnet, daß der Motor für den Drehantrieb der Berieselungsschale (31) ein in das Gehäuse (1) eingebauter und funktionsmäßig an die zentrale Welle (32) der Schale angekuppelter Elektromotor ist.

14. Kaffeemaschine nach Anspruch 13, dadurch gekennzeichnet, daß ein Zahnrad (39) frei drehbar im Innenraum des horizontalen Fortsatzes (7) gelagert ist und funktionsmäßig mit dem in das Gehäuse (1) eingebauten Motor (20) verbunden ist, wobei das Zahnrad (39) eine zentrale kegelstumpfförmige Öffnung (40) hat und die Welle (32) der Schale (31) einen entsprechenden kegelstumpfförmigen oberen Abschnitt hat, mit dessen Hilfe die Schale (31) aufgehängt und drehbar an das Zahnrad (39) angekuppelt ist.

15. Kaffeemaschine nach Anspruch 14, dadurch gekennzeichnet, daß der horizontale Fortsatz (7) den Elektromotor (20) mit seiner Motorwelle (43) enthält, die nach unten gerichtet und an ihrem äußeren Ende mit einer Klauenkupplung (44) versehen ist, während die Welle (32) der Schale (31) auf ihrem oberen Ende eine entsprechende Klauenkupplung und nahe ihrem oberen Ende eine Ringnut (45) hat, die mit einer durch den horizontalen Fortsatz (7) abgestützten Haltestange (46) zusammenwirkt.

16. Kaffeemaschine nach Anspruch 10, dadurch gekennzeichnet, daß die Schale (31) eine auf ihrem Boden (34) aufliegende Scheibe (37) umfaßt, deren Position um die Welle (32) herum einstellbar ist und die eine mit der Ablauföffnung (35) zum Steuern des von der Schale (31) abfließenden Wassers zusammenwirkende Öffnung (38) hat.

17. Kaffeemaschine nach Anspruch 10, dadurch gekennzeichnet, daß der Motor für den Drehantrieb durch ein System von inneren Schaufeln (55) gebildet wird, die radial an der Welle (32) befestigt und kreisförmig mit einer zur Anordnung der Öffnung (11) komplementären Schrägstellung voneinander beabstandet sind, wobei sich die Öffnung (11) nach Art einer Turbinendüse derart zu den Schaufeln hin öffnet, daß das warme Wasser während des Betriebs die für die Drehung der Schale (31) benötigte Energie liefert.

18. Kaffeemaschine nach Anspruch 17, dadurch gekennzeichnet, daß der horizontale Fortsatz (7) einen Innenraum (52) hat, der von einer oberen (7C) und einer unteren (7D) senkrecht zur Achse (16) des Gefäßes (10) angeordneten Wand begrenzt wird und sich über diese Achse hinaus erstreckt, daß die Welle (32) der Schale (31) zwei einander abgewandete Endabschnitte (32A, 32B) hat, die jeweils in Löchern gehalten sind, welche in der oberen (7C) und unteren (7D) Wand als Lager ausgebildet sind, wobei die untere Wand (7D) eine große Öffnung (54) unterhalb der Zone hat, in die die Öffnung (35) für den Ablauf des warmen Wassers aus der Schale (31) während ihrer Drehung verlegt ist.

19. Kaffeemaschine nach Anspruch 17, dadurch gekennzeichnet, daß der horizontale Fortsatz (7) einen Innenraum (52) hat, der von einer oberen Wand (7C) begrenzt ist, sich nach unten öffnet und in dem ein rohrförmiges Element (59) konzentrisch zur Achse (16) vorgesehen ist, während sich die Welle (32) der Schale (31) durch dieses rohrförmige Element (59) erstreckt und über das letztere hinausragt, wo sie frei drehbar mittels einer Halteeinrichtung (60) gehalten ist.

## Fig.1

*Fig. 2*

*Fig. 3*

*Fig. 4*

*Fig. 5*

**Fig. 6**

**Fig. 7**

## Fig. 8

## Fig. 9

## Fig. 10

EP 0 278 197 B1

*Fig.11*

*Fig.12*